Europäisches Patentamt

European Patent Office

Office européen des brevets

(19)

(11) Veröffentlichungsnummer: **0 198 465**
**B1**

(12) **EUROPÄISCHE PATENTSCHRIFT**

(45) Veröffentlichungstag der Patentschrift: **31.10.90**

(51) Int. Cl.$^5$: **C 05 F 9/04**

(21) Anmeldenummer: **86105155.5**

(22) Anmeldetag: **15.04.86**

(54) **Verfahren zum Entsorgen insbesondere von Haushaltungen von organischen Abfällen und Anordnung zur Durchführung des Verfahrens.**

(30) Priorität: **17.04.85 DE 3513852**

(43) Veröffentlichungstag der Anmeldung:
**22.10.86 Patentblatt 86/43**

(45) Bekanntmachung des Hinweises auf die Patenterteilung:
**31.10.90 Patentblatt 90/44**

(84) Benannte Vertragsstaaten:
**AT DE IT SE**

(56) Entgegenhaltungen:
**DE-A-2 842 876**
**US-A-3 138 448**

(73) Patentinhaber: **Kneer, Franz Xaver**
**Am Honigbaum 6**
**D-6345 Eschenburg-Eibelshausen (DE)**

(72) Erfinder: **Kneer, Franz Xaver**
**Am Honigbaum 6**
**D-6345 Eschenburg-Eibelshausen (DE)**

(74) Vertreter: **Schulz, Rütger, Dr. et al**
**Patentanwalt und Rechtsanwalt Mitscherlich &**
**Partner Steinsdorfstrasse 10**
**D-8000 München 22 (DE)**

EP 0 198 465 B1

**Beschreibung**

Die Erfindung betrifft ein Verfahren zum Entsorgen, insbesondere von Haushaltungen, von organischen Abfällen, wie Hausmüll, Tierkot-, Garten-, Grün- und ähnlichen organischen Abfällen, sowie eine Anordnung zur Durchführung des Verfahrens.

Von den drei wesentlichen Methoden zur Beseitigung des in Gemeinden und Städten anfallenden sogenannten kommunalen Abfalls, nämlich Deponieren, Verbrennen und gesteuertes Kompostieren, kommt dem Kompostieren heutzutage die größere Bedeutung zu. Das Deponieren erfordert große, nicht mehr vorhandene und fernab von menschlichen Siedlungen liegende Flächen, führt zur Grundwasserverseuchung und zu Umweltbelastungen durch Faulgase, ganz abgesehen davon, daß durch Windverfrachtungen leichtgewichtige Abfälle die Nachbarschaft solcher Deponien störend beeinflussen. Das Verbrennen erfordert kostspielige Verbrennungsanlagen und Hilfsenergie für den Verbrennungsvorgang und belastet ebenfalls durch schädliche Abgase die Umwelt, auch müssen die Verbrennungsrückstände in Sonderdeponien ordnungsgemäß gelagert werden. Allein das gesteuerte Kompostieren genügt allen modernen Erfordernissen der Abfallbeseitigung, da ohne wesentliche Zufuhr von Fremdenergie die Abfallbeseitigung durch natürliche Stoffwechselvorgänge von Bakterien, Pilzen und Kleinlebewesen erfolgt und das dabei entstehende Endprodukt hygenisiert in Form eines Kompostes dem biologischen Kreislauf wieder zuführbar ist.

Ein solches Kompostierverfahren ist beispielsweise aus der US—PS 3.138.448 bekannt, bei dem der zur Aufrechterhaltung einer aeroben Rotte innerhalb eines allseits geschlossenen und zwangsweise belüfteten Behälters durch den Behälter geführte Luftstrom in Abhängigkeit der im Rottegut herrschenden Temperatur und/oder des Restsauerstoffgehaltes in der Abluft gesteuert wird.

Problematisch für das Kompostieren ist jedoch die unterschliedliche Zusammensetzung des kommunalen Abfalls, der organische und anorganische Abfälle in unterschiedlichster Konfiguration und Ausbildung sowie sonstige Abfälle, als sogenannte Problemabfälle bezeichnet, enthält. Der kommunale Abfall ist daher vor seiner Kompostierung in bestehenden Kompostieranlagen zu sortieren und zu egalisieren, was aufwendige Sortieranlagen benötigt, wobei es nicht auszuschließen ist, daß nicht kompostierbare Abfälle, wie Glasscherben, Kunststoffbeutel, Batterien, u.ä. im Abfall verbleiben. Diese Abfälle stören nicht nur den nachfolgenden Kompostiervorgang, sondern verbleiben als unerwünschte Fremdkörper in dem durch das Kompostieren erhaltenen Kompost.

Durch ständige Aufklärung ist es bereits erreicht worden, daß an vielen Orten für bestimmte Abfälle sogenannte "grüne Mülltonnen" aufgestellt werden, um zum Beispiel Flaschen, Kunststoffbeutel, Batterien u.ä. Problemabfälle getrennt vom übrigen Müll aufzunehmen.

Hier setzt nun die Erfindung ein, der die Aufgabe zugrundeliegt, ein neues Verfahren sowie eine Anordnung zur Durchführung des Verfahrens zu schaffen, mit dem leichter als bisher organische Abfälle zumindest aber die häuslichen organischen Abfälle erfaßbar und durch einen Kompostiervorgang in den natürlichen Kreislauf rückführbar sind.

Für das Verfahren ist diese Aufgabe gemäß der Erfindung durch die kennzeichnenden Merkmale des Patentanspruchs 1 gelöst.

Für die Anordnung zur Durchführung dieses Verfahrens ist diese Aufgabe erfindungsgemäß durch die kennzeichnenden Merkmale des Patentanspruchs 3 gelöst.

Weitere Merkmale der Erfindung ergeben sich aus den Unteransprüchen.

Durch das sortierte Aufgeben der organischen Abfälle in die als Rottebehälter ausgebildeten Mülltonnen werden nicht nur Sortieranlagen eingespart, sondern es wird insbesondere auch das Rotten wesentlich vereinfacht, ohne daß hierbei auf eine geordnete Rotte an einem hierfür vorgesehenen zentralen Platz verzichtet werden muß. Da der Fuhrpark von Kommunen stets sogenannte Container-Fahrzeuge für den Transport von Müll-Containern umfaßt, sind alle Beteiligten an die besondere Art der dezentralisierten Aufstellung und zentralisierten Entsorgung gewöhnt. Besondere Investitionskosten sind für diesen Teil des Verfahrens also nicht mehr aufzuwenden. Es werden lediglich neue, zur Durchführung des Verfahrens besonders ausgestattete Behälter zur Aufnahme der organischen Abfälle benötigt. Das Anschließen dieser Behälter an die zentrale Steuereinheit am Orte der Entsorgung ist einfach, da es mit Hilfe an sich bekannter Maßnahmen durchführbar ist. Die Investitionen sind also auch dort relativ gering, da neben mit Anschlüssen versehenen Standgerüsten und Hebezeugen lediglich eine Luftabsaug-Vorrichtung mit einer in Abhängigkeit von der Ablüft-Temperatur, arbeitenden Regeleinrichtung vorgesehen sind. Selbstverständlich sollte eine gegen Regen schützende Dachabdeckung, also eine offene Halle vorhanden sein, um das Bedienungspesonal und, falls erforderlich, die Nachrotte-Mieten zu schützen. Die als Rottebehälter ausgebildeten Behälter sind leicht zu handhaben. Durch das vor dem Beginn des Rottens erfolgende Impfen des Behälterinhaltes wird ein sicherer Start der Rotte erreicht, die dann durch die kontinuierliche Belüftung aufrechterhalten wird. Da die Behälter dreiteilig ausgebildet sind, lassen sie sich leicht auseinandernehmen und zusammenfügen, so daß auch das Ausschütten des gerotteten Inhaltes keinerlei Schwierigkeiten bereitet. Somit werden auch aufwendige Austragswerkzeuge, wie zum Beispiel mechanisch angetriebene Austragsaggregate hoher Leistung, eingespart. Da als Impfsubstrat Material von der Nachrotte genommen wird, ergeben sich auch mit dem Rottestart keinerlei Schwierigkeiten. Der Rottestart wird wesentlich erleichtert, wenn anfangs ein Sauerstoffspender dem Behälter zugeführt wird; hierfür eignen sich insbesondere anorganische, salzartige Persauerstoff-Verbindungen, wie Alkali- oder Erdalkalipermanganat, das bei relativ feuchtem Behälterinhalt z.B. hohem Anteil an Speiseresten in Pulverform, bei relativ trockenem Behälterinhalt in konzentrierter wässriger Lösung auf die oberste Schicht des im Behälter befindlichen Haufwerkes aufgebracht wird. Daran anschließend wird das Impfmaterial aufgelegt und schließlich die Belüftung durchgeführt. Als zusätzliche Kohlenstoffträger dienen vorzugsweise Sägemehl, Altpapier, Stroh und ähnl., als Stickstoffträger wird bevorzugt Harnstoff verwendet. Die Umgebungsluft tritt durch die nahe am oberen Rand in der Behälterwandung vorgesehenen Belüftungsöffnungen, durchsetzt das im Behälter befindliche Haufwerk aus organischen Abfällen und wird am Behälterboden über die Luftabsaugleitung von der zentralen Steuereinheit abgesaugt. Durch die einsetzenden Rottevorgänge erhöht sich die Temperatur im Behälter bis zur thermophilen Phase der Rotte. Diese Werte werden über die jeweilige Meßleitung ebenfalls der zentralen Steuereinheit übermittelt, um dort im einfachsten Falle als statistischer Mittelwert als Regelparameter für die Belüftung der Behälter zu dienen. Nach 10 bis 14, bzw. nach bis zu 30 Tagen wird die Belüftung beendet und werden die Behälter nach Lösen der Anschlüsse entleert. Die geleerten Behälter werden an ihren dezentralen Aufstellungsort zurückgebracht und entweder die stark angerotteten und hygenisierten Behälterinhalte der Nachrotte in Mietenform oder die endgerotteten Behälterinhalte der Verwertung zugeführt, sowie angelieferte gefüllte Behälter an die zentrale Steuereinheit zum Zwecke der gesteuerten Rotte angeschlossen, die nach dem Beimpfen der Behälterinhalte in der bereits beschriebenen Weise erneut durchgeführt wird. Das stark angerottete Rottegut ist nach etwa 20 Tagen Nachrotte vollständig stabilisiert und kann dann ebenfalls der Verwertung, insbesondere als Humus dem Boden wieder zugeführt werden.

Auf die beschriebene Weise lassen sich einfacher als bisher organische Abfälle, insbesondere Haushaltsabfälle wieder dem natürlichen Kreislauf zuführen, insbesondere erfordert eine solche Entsorgung ein wesentlich geringeres Investitionskapital und ist einfacher zu betreiben als die bisher installierten, auf der Basis der Kompostierung arbeitenden Entsorgungsanlagen. Es werden also auch Investitionskapital und Betriebskosten eingespart. Gegenüber einer Mietenrottung kann beim erfindungsgemäßen Verfahren während des Rottens infolge des Rottens innerhalb geschlossener Behälter Kondens- und Sickerwasser kontrolliert abgeführt und ebenso die Abluft gereinigt in die Atmosphäre überführt werden, so daß keine Umweltbelastungen eintreten können.

Die Erfindung ist nachfolgend anhand eines in der Zeichnung mehr oder minder schematisch dargestellten Ausführungsbeispieles beschrieben.

Es zeigen:

Figur 1 ein Funktionsschema der zentralen Entsorgungsanlage zur Durchführung des erfindungsgemäßen Verfahrens und

Figur 2 einen Schnitt durch einen Behälter zur Durchführung des erfindungsgemäßen Verfahrens.

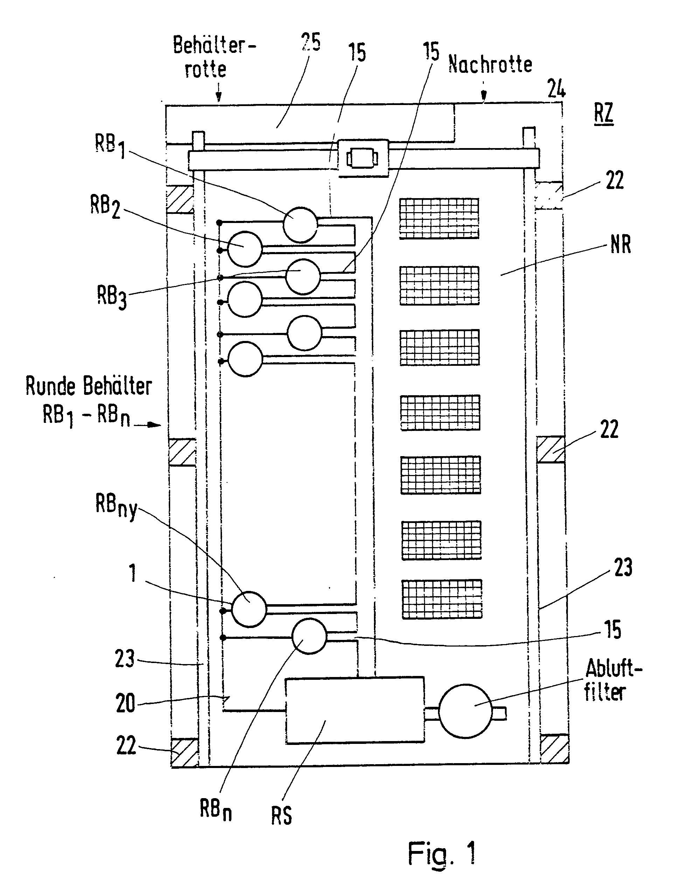

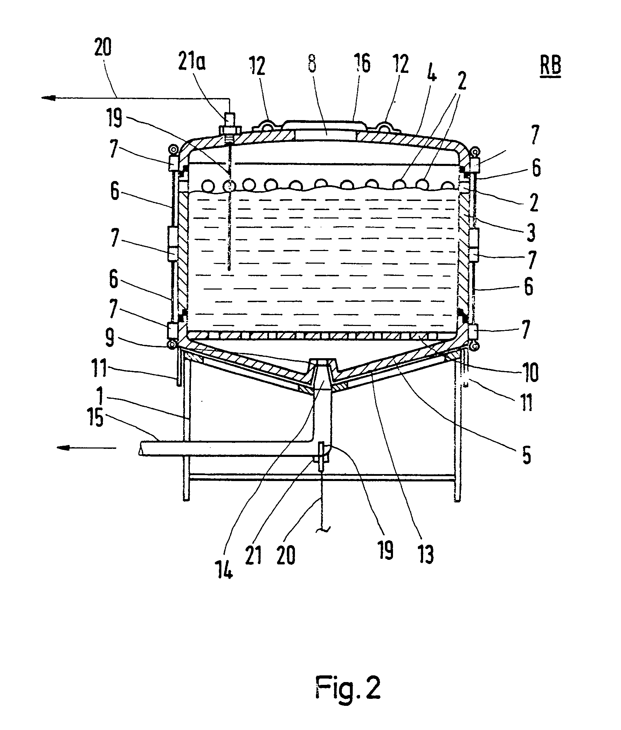

Zur Entsorgung von organischen Abfällen, insbesondere von Hausmüllabfällen sind eine Vielzahl von dezentral im Bereiche von Wohnsiedlungen aufgestellten Behältern RB vorgesehen, von denen in Figur 2 ein Behälter im Schnitt dargestellt ist. Die einzelnen Behälter werden nach ihrer Füllung oder in zeitlich vorbestimmten Rhythmus ähnlich der regelmäßigen Müllabfuhr mittels hier nicht dargestellter Container-Fahrzeuge an eine zentrale, in Figur 1 dargestellte Rottestation RZ überführt, um dort an eine Steuereinheit RS angeschlossen zu werden. Hierzu dienen nicht däher dargestellte Saugleitungen 15 und Steuerleitungskabel 20, die mittels nicht näher dargestellter, an sich bekannter Steckverbinder 21 mit den einzelnen Behältern zu verbinden sind. Ferner ist in der Rottestation RZ eine ebene Nachrotte-Fläche NR vorgesehen, die mit einem nicht dargestellten Abwassersammler kommunizierende, mittels Gitter abgedeckte Öffnungen aufweist und der Fläche gegenüberliegt, auf der die einzelnen Behälter $RB_1$ bis $RB_n$ für die zentrale Rotte aufgestellt sind. Die Rottestation ist zweckmäßigerweise mit einem hier nicht dargestellten, auf Pfeilern 22 ruhenden Dach gegenüber Regen geschützt. Schließlich ist ein auf an den Pfeilern 22 befestigten Schienen 23 verfahrbares Hebezeug 24 vorgesehen, um die Behälter von auf einer Anfahrrampe 25 stehenden Fahrzeugen abzunehmen und auf die einzelnen Standgerüste 1 aufsetzen zu können. Mit Hilfe des Hebezeuges 24 werden die einzelnen Behälter von den Standgerüsten 1 abgenommen und auf die Nachrottefläche NR überführt, um dort entleert zu werden. Die entleerten Behälter werden mit Hilfe des Hebezeuges auf das jeweilige zugeordnete Fahrzeug ruckgeführt.

Nunmehr sei der Aufbau der einzelnen Behälter RB im Zusammenhang mit Figur 2 beschrieben, dem sowohl am Orte seiner dezentralen als auch am Orte seiner zentralen Aufstellung ein ortsfestes Gestell 1 zugeordnet ist, auf das der Behälter in der dargestellten Art aufgesetzt ist. Jeder der ein Volumen von 5 bis 50 m³ aufweisenden, vorzugsweise wärmeisolierten Behälter, besteht aus einem zylindermantelförmigen Mittelstück 3, mit dem zwei Deckelstücke 4 und 5 über Spannschrauben 6 und Spannschlösser 7 lösbar verbunden sind. Das obere Deckelstück 4 weist eine mit Hilfe eines Deckels 16 verschließbare Einfüllöffnung 8 und das untere Deckelstück 5 weist eine Öffnung 9 sowie einen Siebboden 10 und Stützfüße 11 auf. Über Ösen 12 kann der Behälter vom Gestell 1 abgehoben werden. Jedes Gestell weist eine zentrierende Sitzfläche 13 für den Behälter auf. Die in der zentralen Rottestation RZ befind-

lichen Gestelle weisen mittig einen Einlaßstutzen 14 auf, der mit einer die Rotte-Abluft führenden Leitung 15 mit der Steuereinheit RS verbunden ist. Mit dem Einlaßstutzen 14 des Gestells 1 korrespondiert jeweils die Absaugöffnung 9 des Behälters im aufgesetzten Zustand formschlüssig und im wesentlichen gasdicht.

Da bei den dezentral aufgestellten Gestellten 1 der Einlaßstutzen 14 fehlt, kommuniziert die Absaugöffnung 9 der Behälter dort direkt mit der Atmosphäre, so daß ein ungehinderter Luftaustausch und ein Abfließen von Kondenswasser stattfinden kann.

Für jeden Behälter ist je eine Temperatur-Meßsonde 19 in der die Rotte-Abluft führenden Leitung 15 angeordnet und mit der Steuereinheit RS verbunden, um Aufschluß über die Temperatur-Verhältnisse im Rottematerial zu geben, nach denen die genannte Steuereinheit die Zwangsbelüftung der einzelnen Behälter steuert. Unabhängig davon kann jeder Behälter RB ferner gegebenenfalls mit einer in das Behälterinnere reichenden Temperatur-Meßsonde 19 ausgestattet sein, an die über eine nicht näher dargestellte Steckverbindung 21a ebenfalls die Steuerleitung 20 der Steuereinheit RS angeschlossen werden kann.

Die Behälter RB$_1$ bis RB$_n$ weisen im gefüllten Zustand ein aus organischen z.B. häuslichen Abfällen bestehendes Haufwerk 18 auf, das sich auf dem Siebboden 10 abstützt, durch das Luft sowie Feuchtigkeit hindurchtreten kann. Der Eintritt der Rotteluft erfolgt über Belüftungsöffnungen 2, die nahe dem oberen Rande des Mittelstückes 3 des Behälters RB vorgesehen sind. Da Luft ungehindert zu- und austreten kann, beginnt eine gewisse Rotte bereits am dezentralen Aufstellungsort des Behälters. Sobald jedoch der Behälter in die zentrale Rottestation RZ verbracht und dort mit der zentralen Steuereinheit RS verbunden ist, findet eine Zwangsbelüftung statt, da in dem freien Raum zwischen Siebboden 10 und Deckelstück 5 ein gewisses Vakuum erzeugt wird und dadurch die Umgebungsluft durch die Belüftungsöffnungen 2 und durch das Haufwerk 18 gesaugt wird.

Vor dem Beginn der Zwangsbelüftung ist zum Starten der intensiven Rottevorgänge in den Behältern das dort befindliche Haufwerk mit Impfmaterial, vorzugsweise in Form von bereits angerottetem Material, mit einer Schichthöhe von 2 bis 10 cm zu bedecken. Dies erfolgt ebenfalls durch die Öffnung 8 des Behälters. Das Starten der Rotte und das Rotten selbst ist ferner dadurch zu beschleunigen, wenn vor dem Einbringen des Impfmaterials zusätzlich ein Sauerstoffspender auf die oberste Schicht des Haufwerkes 18 aufgetragen wird. Hierzu eignen sich insbesondere anorganische salzartige Persauerstoffverbindungen, zum Beispiel Alkali- oder Erdalkalipermanganate, insbesondere Calciumpermanganat und Kaliumpermanganat. Diese Sauerstoffspender sind in Abhängigkeit der Feuchte des Haufwerkes im Behälter in Pulverform—bei z.B. infolge von Speiseresten zu feuchtem Haufwerk—oder aber in einer konzentrierten wässrigen Lösung—bei zu trockenem Haufwerk—einzubringen. Die an der Rottestation tätigen Rottewärter können die Feuchte des Haufwerkes zum Beispiel durch die Handprobe leicht feststellen; tropft zum Beispiel beim Zusammendrücken einer Handvoll Haufwerk Wasser ab, so ist das Material zu feucht.

Mit beginnender Zwangsbelüftung wandern Bakterien und Mikroorganismen bevorzugt in Strömungsrichtung der Luft von oben nach unten durch das Haufwerk und wandeln durch ihre Stoffwechselvorgänge die das Haufwerk bildenden organischen Abfälle in organische Bodensubstanz um. Da das Befüllen der Behälter mit organischen Abfällen relativ langsam erfolgt, sind bereits in allen Schichten des Haufwerkes Rottevorgänge existent. Diese Rottevorgänge werden durch das Belüften intensiviert und insbesondere in eine gesteuerte aerobe Phase überführt.

Nach einer Belüftung von 10 bis 14 Tagen—wobei die Steuerung derart zu gestalten ist, daß während mindestens dreier Tage die Ablufttemperatur in den einzelnen Behältern zwischen +40 bis +60°C liegen muß—, werden die Anschlüsse gelöst und die Behälter mit Hilfe des Hebezeuges 24 über der Nachrottefläche NR entleert. Hierzu sind die Spannschlösser 7 des unteren Deckelstückes 5 zu lösen, so daß nach Abnahme dieses Deckelstückes der Inhalt des Behälters nach unten herausfallen kann. Nach dem Reinigen des Behälters, zum Beispiel durch Abspritzen, wird dieser wieder durch Anschließen des unteren Deckelstückes geschlossen und kann danach an seinen dezentralen Aufstellungsort zurückgebracht werden. Das auf der Nachrottefläche befindliche Material wird in an sich bekannter Weise in Mieten lose aufgeschichtet und kann nach 20 Tagen abgepackt oder als Schüttgut der weiteren Verwendung zugeführt werden. Es kann aber auch das Rotten in den Behältern bis zu 30 Tagen ausgedehnt werden. Dies führt zu einem anwendungsreifen Endprodukt, das keiner Nachrotte mehr bedarf.

Anstelle der beschriebenen Behälter mit rundem Querschnitt können seblstverständlich Behälter mit unterschiedlichem, wie z.B. rechtekkigem Querschnitt verwendet werden. Auch können ihre Außenkonturen den üblichen, fahrzeugverfahrbaren Containern angepaßt sein mit fahrzeugseitig angeordneten Kupplungsorganen korrespondierenden Widerlagern. Ferner kann der Belüftungsanschluß an einer anderen Stelle des Behälters—als in Figur 2 dargestellt—angeordnet werden.

Schließlich kann der zentralen Rottestation RZ auch eine Filteranlage, zum Beispiel in Form eines sogenannten Biofilters gemäß der DE—OS 25 58 256, zugeordnet werden, über die die Abluft der Behälter gereinigt ins Freie überführt wird.

**Patentansprüche**

1. Verfahren zum Entsorgen, insbesondere von Haushaltungen, von organischen Abfällen, wie Hausmüll-, Tierkot-, Garten-, Grün- und ähnlichen Abfällen, bei dem dezentral aufgestellte Behälter (RB) mit organischen Abfällen gefüllt und nach ihrer Füllung an eine zentrale, eine Behälter-Anschlüsse, Belüftungs- und Steueranordnungen aufweisende Rottestation (RZ) überführt werden, vor dem Rotten die gefüllten Behälter (RB) mit einem das Rotten der organischen Abfälle egalisierenden Impfsubstrat und gegebenenfalls mit einem Sauerstoff-Spender beimpft werden, die gefüllten und beimpften Behälter (RB) zwecks geregelter Belüftung an eine gemeinsame Absaugleitung (15) sowie an Steuerleitungen (20) angeschlossen und derart belüftet werden, daß während mindestens dreier Tage die Abluft-Temperatur der einzelnen Behälter mindestens zwischen +40° bis +60°C liegt, und nach 10 bis 30 Tagen, vorzugsweise 14 Tagen, die Behälter (RB) von der Steueranordnung gelöst und entleert sowie die geroteten Behälterinhalte bei Anwendung einer Rottezeit von 10 bis 14 Tagen einer bis 20 Tage umfassenden Nachrotte zugeführt und die geleerten Behälter an ihren dezentralen Aufstellungsort zurückgebracht werden.

2. Verfahren nach Anspruch 1, dadurch gekennzeichnet, daß als Impfsubstrat ein das C:N-Verhältnis der organischen Abfälle auf 20 bis 30 einstellendes Gemenge aus Nachrottegut und einem Kohlen- und/oder Stickstoffträger und als Sauerstoffspender eine Persauerstoffverbindung, vorzugsweise Alkali- oder Erdalkalipermanganat, verwendet werden.

3. Verfahren nach Anspruch 2, dadurch gekennzeichnet, daß der Sauerstoffspender in Abhängigkeit von der Feuchte des Haufwerkes im Behälter in pulverförmiger Form oder wässriger Lösung vor dem Einbringen des Impfsubstrates vorzugsweise als oberste Schicht auf das Haufwerk aufgebracht wird.

4. Anordnung zur Durchführung des Verfahrens nach den Ansprüchen 1 bis 3, dadurch gekennzeichnet, daß sie dezentral aufgestellte, als Rottebehälter ausgebildete Sammelbehälter (RB) und eine zentrale Rottestation (RZ) umfaßt, daß den Sammelbehältern (RB) einander entsprechende Standgerüste (1) am dezentralen und am zentralen Aufstellungsort zugeordnet sind, und daß die zentrale Rottestation (RZ) eine mindestens Saug- und Steuereinrichtungen aufweisende und mit den Behältern verbindbare Steuereinheit (RS), eine Nachrottefläche (NR) sowie mindestens ein Hebezeug (24) für die Handhabung der zu- und abgelieferten Behälter (RB) umfaßt.

5. Behälter zur Durchführung des Verfahrens nach Anspruch 1, dadurch gekennzeichnet, daß er ein wärmeisolierter Behälter (RB) ist, dessen Boden- und Deckelabschnitte (4, 5) lösbar mit einem mittleren Zentralteil (3) verbunden sind, daß der obere Deckelabschnitt (4) gegebenenfalls eine Öffnung zur Aufnahme eines Thermometers (19) und eine durch einen Deckel (16) verschließbare Einfüllöffnung (8) aufweist, daß der Bodenabschnitt (5) einen im Abstand angeordneten Siebboden (10), eine zentrale Ansaugöffnung (9) sowie auf der Außenfläche nach unten gerichtete Widerlager (11) zum Aufsetzen des Behälters auf Standgerüste (1) aufweist, und daß das Zentralteil (3) nahe seinem oberen Rande mit Belüftungsöffnungen (2) versehen ist.

6. Behälter nach Anspruch 5, dadurch gekennzeichnet, daß die der zentralen Rottestation (RZ) zugeordneten Standgerüste (1) mit der Absaugöffnung (9) des Behälters (RB) kommunizierende Einlaßstutzen (14) von zur zentralen Steuereinheit (RS) führenden Saugleitungen (15) aufweisen.

7. Behälter nach Anspruch 5, dadurch gekennzeichnet, daß seine Außenkontur als fahrzeugverfahrbarer, mit fahrzeugseitig angeordneten Kupplungsorganen korrespondierenden Widerlagern versehener Container ausgebildet ist.

**Revendications**

1. Procédé de traitement de déchets organiques, tels que des ordures ménagères, des excréments animaux, des déchets de jardin, végétaux et analogues, dans lequel des réservoirs (RB) installés de façon décentralisée sont remplis avec des déchets organiques et, après leur remplissage, sont transportés à une station de compostage (RZ) centrale présentant des raccords pour des réservoirs et des agencements d'aération et de commande, avant le compostage, un substrat d'inoculation, égalisant la fermentation des déchets organiques, et le cas échéant un agent donneur d'oxygène sont inoculés au contenu des réservoirs (RB) remplis, les réservoirs (RB) remplis, ayant reçu l'inoculation, sont raccordés, en vue d'une aération régulée, à une conduite d'aspiration (15) commune et à des lignes de commande (20) et sont aérés de telle manière que pendant au moins trois jours, la température de l'air aspiré hors des différents réservoirs soit comprise entre au moins +40 et +60°C et, après 10 à 30 jours, de préférence 14 jours, les réservoirs (RB) sont déconnectés de l'agencement de commande et vidés et, dans le cas d'une durée de fermentation de 10 à 14 jours, les contenus fermentés des réservoirs sont soumis à une post-fermentation d'une durée jusqu'à 20 jours et les réservoirs vidés sont ramenés à leur emplacement d'installation décentralisé.

2. Procédé selon la revendication 1, caractérisé par le fait qu'en tant que substrat d'inoculation on emploie un mélange de matière de post-fermentation et de vecteur de carbone et/ou d'azote, réglant le rapport C:N des déchets organiques à 20 jusqu'à 30, et en tant qu'agent donneur d'oxygène, un composé peroxygéné, de préférence un permanganate alcalin ou alcalino-terreux.

3. Procédé selon la revendication 2, caractérisé par le fait qu'en fonction de l'humidité des matières amassées dans le réservoir, l'agent dispensateur d'oxygène est introduit sous forme pulvérulente ou sous forme de solution aqueuse, de préférence comme couche supérieure sur les matières amassées, avant l'introduction du substrat d'inoculation.

4. Installation pour la mise en oeuvre du procédé selon les revendications 1 à 3, caractérisée par le fait qu'elle comprend des réservoirs collecteurs (RB), installés de manière décentralisée et réalisés sous la forme de réservoirs de fermentation, et une station de compostage centrale (RZ), que des bâtis (1) correspondants les uns aux autres sont associés aux réservoirs collecteurs (RB) aux emplacements d'installation décentralisés et centralisé, et que la station de compostage centrale (RZ) comprend une unité de commande (RS), présentant au moins des dispositifs d'aspiration et de commande et susceptible d'être reliée aux réservoirs, une surface de post-fermentation (NR) et au moins un dispositif de levage (24) pour la manipulation des réservoirs amenés et évacués.

5. Réservoir pour la mise en oeuvre du procédé selon la revendication 1, caractérisé par le fait que ledit réservoir est un réservoir (RB) à isolation thermique dont les parties de fond et de couvercle (4, 5) sont reliées de manière amovible à une partie centrale (3) médiane, que la partie de couvercle supérieure (4) présente le cas échéant une ouverture pour la réception d'un thermomètre (19) et une ouverture de remplissage (8) susceptible d'être fermée par un couvercle (16), que la partie de fond (5) présente un fond à tamis (10) disposé à distance, une ouverture d'aspiration (9) centrale et, sur sa face extérieure, des butées (11) orientées vers le bas, en vue de la pose du réservoir sur des bâtis (1), et que la partie centrale (3) est munie, à proximité de son bord supérieur, d'ouvertures d'aération (2).

6. Réservoir selon la revendication 5, caractérisé par le fait que les bâtis (1) associés à la station de compostage centrale (RZ) présentent des tubulures d'admission (14), communiquant avec l'ouverture d'aspiration (9) du réservoir, pour des conduits d'aspiration (15) menant à l'unité de commande (RS) centrale.

7. Réservoir selon la revendication 5, caractérisé par le fait que son contour extérieur est réalisé sous la forme d'un conteneur susceptible d'être transporté par un véhicule et muni de butées correspondant à des éléments d'accouplement prévus côté véhicule.

**Claims**

1. A method of disposing, in particular from households, of organic waste such as household refuse, animal droppings, garden, lawn and like refuse, in which containers (RB) set up at decentralised locations are filled with organic waste and when full are taken to a central rotting station (RZ) equipped with container connections, aeration and control arrangements; before rotting the filled containers (RB) are inoculated with an inoculating substrate that homogenises the rotting of the organic waste, and if desired with a source of oxygen; for the purpose of controlled aeration the filled and inoculated containers (RB) are connected to a common suction line (15) and to control lines (20) and are aerated so that for at least three days the off-gas temperature of the individual containers is at least between +40° and +60°C, and after 10 to 30 days, preferably 14 days, the containers (RB) are disconnected from the control arrangements and emptied and, when a rotting time of 10 to 14 days has been used, the rotted contents of the containers are transferred to a post-rotting treatment for up to 20 days, and the emptied containers are returned to their decentralised locations.

2. A method according to claim 1, characterised in that the inoculating substrate used comprises post-rotted material and a carbon and/or nitrogen carrier in an amount such that the C:N ratio of the organic refuse is adjusted to from 20 to 30, and the oxygen source used is a peroxy compound, preferably alkali or alkaline earth permanganate.

3. A method according to claim 2, characterised in that the oxygen source is applied, depending on the moisture content of the body of material in the container, as powder or an aqueous solution, before the inoculating substrate is introduced, preferably as a layer on top of the body of material.

4. An arrangement for carrying out the method according to any one of claims 1 to 3, characterised in that it includes collecting containers (RB) in the form of rotting containers set up at decentralised locations and a central rotting station (RZ), in that stands (1) for the collecting containers (RB) are provided at the decentralised and central stations and in that the central rotting station (RZ) includes a control unit (RS) having at least suction and control devices and adapted to be connected to the containers, a post-rotting area (NR) and at least one lifting device (24) for handling the containers (RB) that are delivered and removed.

5. A container for carrying out the method according to claim 1, characterised in that it is a thermally-insulated container (RB) whereof the base and cover sections (4, 5) are detachably connected to a central part (3), in that if required the upper section (4) of the cover has a hole for a thermometer (19) and a charging opening (8) closable by a lid (16), in that the base section (5) has a raised perforated base (10), a central suction opening (9) and, on the outer surface, downwardly facing abutments (11) for placing the container on stands (1), and in that the central part (3) is provided with ventilation openings (2) near its upper rim.

6. A container according to claim 5, characterised in that the stands (1) associated with the central rotting station (RZ) have inlet connections (14) of suction lines (15) leading to the central control unit (RS) that communicate with the suction opening (9) of the container (RB).

7. A container according to claim 5, characterised in that its external form is that of a container which can be transported by a vehicle and is provided with abutments corresponding to coupling members arranged on the vehicle side.

Fig. 1

EP  0 198 465  B1

Fig. 2

2